# EUROPÄISCHE PATENTSCHRIFT

(11) **EP 2 863 193 B1**
(45) Veröffentlichungstag und Bekanntmachung des Hinweises auf die Patenterteilung: **06.09.2017**
(21) Anmeldenummer: 14179235.8
(22) Anmeldetag: 31.07.2014
(51) Int. Cl.: G01K 7/02

(54) **Sensorvorrichtung mit einem RFID-Chip zum Speichern von Informationen über die Sensorvorrichtung und Adapterelement mit einem RFID-Chip zum Speichern von Informationen über eine mit dem Adapterelement verbundene Sensorvorrichtung**
Sensor apparatus comprising an RFID-Chip for storage of information about the sensor apparatus and adapter element comprising an RFID-Chip for storage of information about a sensor apparatus connected with the adapter element
Dispositif de capteur avec une radio-étiquette (RFID-Chip) pour mémoriser de l'information sur le dispositif de capteur et élément adapteur avec une radio-étiquette (RFID-Chip) pour mémoriser ladite information sur un capteur connecté avec l'élément adapteur

(30) Priorität: 15.10.2013 DE 102013111376
(43) Veröffentlichungstag der Anmeldung: 22.04.2015
(73) Patentinhaber: Ipetronik GmbH & Co. KG, 76532 Baden-Baden (DE)
(72) Erfinder: Heck, Robert, 76532 Baden-Baden (DE)
(74) Vertreter: Popp, Eugen

(56) Entgegenhaltungen:
- EP-A1- 1 791 048
- WO-A1-2011/008279
- DE-B3-102012 003 614
- US-A1- 2006 045 164
- Sumi Helal: "Mobile&Pervasive Computing at the University of Florida", , 14. Juli 2013 (2013-07-14), XP055190979, Gefunden im Internet: URL:https://web.archive.org/web/2013071420 1405/http://www.icta.ufl.edu/pervasive-app lications.htm [gefunden am 2015-05-21]

## Beschreibung

Die Erfindung betrifft eine Sensorvorrichtung gemäß dem Oberbegriff des Anspruchs 1 sowie ein Adapterelement mit einer Sensorvorrichtung gemäß Anspruch 12. Sensorvorrichtungen der hier angesprochenen Art sind grundsätzlich bekannt. Im Bereich der Messtechnik ist es üblich, dass an eine Signalverarbeitungseinrichtung eines Messgeräts, wie beispielsweise eines Messverstärkers oder dergleichen, mehrere unterschiedliche Sensoren mit unterschiedlichen oder gleichen Funktionen angeschlossen werden. Bei derartigen Sensoren kann es sich beispielsweise um Temperatursensoren, auch Thermoelement genannt, handeln, die mit einem Temperaturmessgerät verbunden werden. Diese Thermoelemente können unterschiedliche thermoelektrische und chemische Eigenschaften aufweisen und insbesondere vom Typ-K; -R; -S; -T; -N oder -J sein. Je nach Einsatzgebiet oder Umweltbedingungen wird der passende Sensor ausgewählt. Beim Einrichten der Messstellen, beispielsweise zur Durchführung von Messungen in einem Kraftfahrzeug, beim Wechseln der Sensoren und/oder des Messgeräts müssen die Eigenschaften der Sensoren in die entsprechenden Kanal-Parameter, d.h. insbesondere der Sensor-Typ und die Skalierung des Sensors, etc., der Messgeräte eingetragen werden. Das Messgerät muss also an die unterschiedlichen Sensoren angepasst werden und muss daher wissen, um welchen Sensor es sich handelt und welche Eigenschaften der Sensor besitzt. Wenn also ein Sensor von einem Messgerät abgesteckt und ein anderer Sensor, insbesondere ein Sensor mit einer unterschiedlichen Messaufgabe oder anderen Eigenschaften, auf das Messgerät aufgesteckt wird, muss die Messeinrichtung zunächst neu eingestellt werden.

In der Vergangenheit führten in dem Messgerät falsch eingestellte Parameter immer wieder zu Fehlmessungen. Um dies zu verhindern, werden die Thermoelemente der einzelnen Messstellen messgeräteseitig beschriftet, damit die Sensoren mit den richtigen voreingestellten Messkanälen verbunden werden. Erschwerend ist hierbei jedoch die Tatsache, dass sich die eigentliche Messstelle, d.h. der Ort des Sensors beispielsweise in einem Kraftfahrzeug, meist weiter entfernt von den Messgeräten befindet. Um eine Verbindung mit dem Messgerät herzustellen, werden die Sensoren daher mit Steckverbindern verbunden, die über Leitungen wiederum mit dem Messgerät und einem entsprechend zugeordneten Messkanal verbunden sind. Die Leitungen werden üblicherweise in Kabelschächten geführt. Im speziellen Fall der mobilen Messtechnik im Fahrzeugbau können sich die Messstellen im Übrigen in bauartbedingten Hohlräumen befinden. Eine Zuordnung der Messstelle zum Messgerät und dessen Messkanal ist dann nur noch erschwert möglich. Ebenfalls müssen beim Tausch eines Messgeräts die Parameter des jeweiligen Steckplatzes des vorherigen Messgeräts übernommen und die Stecker der Sensoren darüber hinaus mit dem entsprechend eingestellten Kanal verbunden werden. Ferner ist insbesondere in der mobilen Messtechnik der Montageort der Messgeräte aus Platzgründen nicht immer einsehbar und erschwert die kanalrichtige Zuordnung bzw. das Tauschen der mit den Sensoren zu verbindendenden Steckverbinder. Im Stand der Technik wurde deshalb dazu übergegangen, eine automatische Erkennung der Kanalzuordnung und der Parameter der Sensoren vorzunehmen.

Insbesondere wurde dazu übergegangen, Sensoren mit Speichereinrichtungen auszustatten, in denen die Arbeitsparameter der Sensoren hinterlegt sind. Bei einem Sensorwechsel kann das Messgerät somit die Arbeitsparameter aus dem jeweiligen Speicherelement des Sensors auslesen, so dass die fehlerhafte Einstellung von Parametern in dem Messgerät vermieden wird. Beispielsweise kann hierzu ein leitungsgebundener integrierter Schaltkreis auf der Basis von TEDS (Transducer Electronic Data Sheet) oder eine drahtlose Informationsübermittlung mittels RFID-Chip (Radio-Frequency-Identification) bereitgestellt werden.

Beide Ansätze haben den Nachteil, dass sie spezielle Steckverbindungen benötigen. Bei "TEDS" müssen die zusätzlichen Steckkontakte in den jeweiligen Sensor integriert werden, während bei den bekannten RFID-Lösungen speziell gefertigte Stecker zum Einsatz kommen, die integrierte RFID-Chips aufweisen. Durch die Integration der RFID-Chips wird der Platzbedarf vergrößert und folglich muss das Gehäuse des Sensors vergrößert werden, um den RFID-Chip aufnehmen zu können. Diese Sensoren weisen folglich von den Standardmaßen abweichende Abmessungen auf.

US 2006/0045164 A1 offenbart ein Thermoelement mit einem Stecker, in den ein RFID-Chip eingebettet ist, auf dem Informationen zur Wärmeleitung im Sensorsystem gespeichert sind.

EP 1 791 048 A1 offenbart ebenfalls einen Stecker eines Sensors, der einen RFID-Chip mit relevanten Daten des Sensors aufweist.

Sumi Helal: "Mobile&Pervasive Computing at the University of Florida", https:// web.archive.org/web/20130714201405/http://www.icta.ufl.edu/pervasive-applications.htm offenbart einen Adapter, der vor den Stecker eines Elektrogeräts gesetzt werden kann, und auf dem Informationen über selbiges Gerät gespeichert sind. Aufgabe der vorliegenden Erfindung ist es daher, eine Sensorvorrichtung und ein Adapterelement verbunden mit einer Sensorvorrichtung zu schaffen, die eine automatische Zuordnung von Sensoren ermöglichen, und die nur einen geringen Platzbedarf aufweisen.

Zur Lösung der oben genannten Aufgabe wird eine Sensorvorrichtung mit den Merkmalen des Anspruchs 1 vorgeschlagen. Bei dem Sensor handelt es sich insbesondere um ein Thermoelement, was mindestens einen oder mehrere Steckkontakte zum Verbinden der Sensorvorrichtung mit einer Buchse, insbesondere eines Steckverbinders oder eines Messgeräts, aufweist. Ferner umfasst die Sensorvorrichtung einen RFID-Chip zum Speichern von Informationen über den Sensor. Der RFID-Chip ist an der Außenseite des Sensorelements an einer den Steckkontakt bzw. die Steckkontakte aufweisenden Stirnseite angeordnet.

Vorteilhafterweise macht die vorliegende Erfindung eine automatische Zuordnung von Sensoren möglich, die mit einem Messgerät verbunden werden, ohne dass ein erweiterter Platzbedarf bei den Sensoren oder bei den Messgeräten erforderlich ist. Dies wird dadurch möglich, dass der RFID-Chip an der Außenseite des Sensors an einer den Steckkontakt bzw. die Steckkontakte aufweisenden Stirnseite angeordnet ist.

Besonders vorteilhaft ist es, wenn der RFID-Chip im Wesentlichen flach ausgebildet ist. In diesem Fall ist der Chip besonders platzsparend ausgebildet und kann folglich noch zu einer weiteren Reduzierung des Platzbedarfs beitragen. Insbesondere kann der RFID-Chip unmittelbar auf das Gehäuse des Sensors aufgeklebt sein. Denkbar ist jedoch auch die mittelbare Anbringung des RFID-Chips auf dem Sensor mittels eines Adapterelements, welches auf die Steckkontakte des Sensors aufsteckbar sein kann. Das Adapterelement kann beispielsweise als dünne Leiterplatte ausgebildet sein. Auf diese Weise ist der Sensor auch nachrüstbar mit dem RFID-Chip verbindbar. Die Geometrie des Adapterelements ist vorzugsweise an die die Steckkontakte aufweisende Stirnseite des Sensors angepasst und insbesondere flach ausgebildet, um den Platzbedarf zu reduzieren.

Vorteilhafterweise ist der RFID-Chip im Benutzungszustand des Sensors zwischen dem Sensor und der Buche, insbesondere des Steckverbinders oder des Messgeräts, angeordnet. Auf diese Weise wird vermieden, dass eine bauliche Modifizierung des Sensors oder des Messgeräts erforderlich ist. Der RFID-Chip kann folglich auf einen herkömmlichen Sensor aufgebracht werden, der wiederum mit einem herkömmlichen Steckverbinder oder einem Messgerät verbindbar ist. Der Steckverbinder oder das Messgerät weist zum Auslesen des RFID-Chips einen entsprechenden Empfänger auf.

Vorteilhafterweise handelt es sich bei dem erfindungsgemäßen Sensor um einen Temperatursensor, d.h. um ein Thermoelement, welches insbesondere vom Typ "Mini" ist. Vorteilhafterweise ist der RFID-Chip zwischen zwei Steckkontakten des Sensors angeordnet.

Zur Lösung der oben genannten Aufgabe wird auch ein Adapterelement mit den Merkmalen des Anspruchs 12 vorgeschlagen. Das Adapterelement dient zum Verbinden mit einem Sensor, insbesondere mit einem Thermoelement, und weist einen RFID-Chip zum Speichern von Informationen über den Sensor auf.

Der RFID-Chip ist in vorteilhafter Weise an dem Adapterelement befestigt, insbesondere daran angeklebt. Bei dem Adapterelement kann es sich beispielsweise um eine flach ausgebildete Leiterplatte handeln. Ferner kann das Adapterelement auf die Steckkontakte des Sensors aufsteckbar ausgebildet sein. Auf diese Weise lassen sich bestehende Sensoren in vorteilhafter Weise mittels des Adapterelements einfach mit einem RFID-Chip nachrüsten. Eine händische Beschriftung der Messstelle entfällt somit, da die Informationen über den jeweiligen Sensor auf dem RFID-Chip gespeichert und durch das Messgerät mit Hilfe eines entsprechenden Auslesegeräts (Empfänger) ausgelesen und zugeordnet werden können.

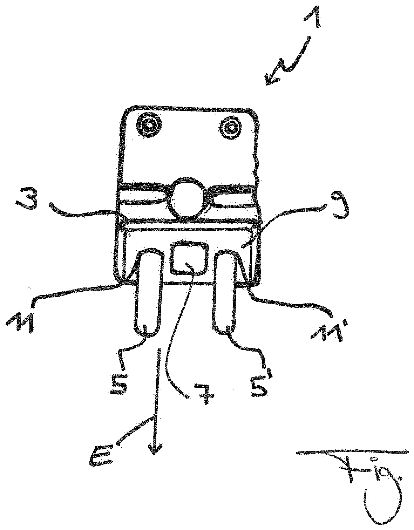

Die Erfindung wird im Folgenden anhand der einzigen Figur näher erläutert.

Die Figur zeigt eine schematische Darstellung eines Sensors 1, bei dem es sich beispielhaft um ein Thermoelement vom Typ "Mini" handelt. An einer Stirnseite 3 weist der Sensor 1 zwei Steckkontakte 5 und 5' auf, die zum Verbinden mit einer Buchse eines entsprechenden Messgeräts, wie beispielsweise einer Temperaturmesseinrichtung, oder eines Steckverbinders, vorgesehen sind.

In der dargestellten Ausführungsform der Erfindung ist ein RFID-Chip 7 nicht unmittelbar auf die Außenseite, insbesondere auf die Stirnseite 3 des Sensors 1 aufgebracht. Vielmehr ist der RFID-Chip mittelbar an der Außenseite des Gehäuses des Sensors 1 mittels eines Adapterelements 9 angebracht, welches vorliegend dazu ausgebildet ist, auf die Steckkontakte 5, 5' aufgesteckt zu werden. Hierzu umfasst das Adapterelement 9 entsprechende Durchgangslöcher 11, 11', die derart ausgebildet sind, dass die Steckkontakte 5, 5' durch diese hindurchführbar sind. Grundsätzlich denkbar ist auch eine andere, beispielsweise eine klebende Verbindung mit dem Sensorgehäuse.

Das Adapterelement 9 ist an die Geometrie der Stirnseite 3 des Sensors 1 angepasst und folglich rechteckig ausgebildet. Vorzugsweise ragt das Adapterelement 9 nicht über die Umfangsseiten der Stirnseite 3 hinaus.

In der dargestellten Ausführungsform ist der RFID-Chip 7 auf das Adapterelement aufgebracht, insbesondere aufgeklebt und im mit dem Sensor 1 verbundenen Zustand des Adapterelements 9 zwischen den Steckkontakten 5, 5' angeordnet. Im Benutzungszustand des Sensors 1 ist der RFID-Chip 7 zwischen dem Sensor 1 und der zugehörigen Buchse (in der Figur nicht gezeigt) angeordnet.

Der RFID-Chip 7 ist programmierbar ausgebildet, so dass Informationen über den Sensor gespeichert werden können, bei denen es sich insbesondere um den Sensortyp, die Skalierung des Sensors etc. handeln kann. Das Adapterelement 9 kann entweder bereits während der Herstellung des Sensors 1 fest mit diesem verbunden bzw. darauf aufgesteckt werden. Alternativ kann während der Herstellung des Sensors der RFID-Chip 7 bereits entsprechend programmiert und an die Stirnseite 3 des Sensors 1 unmittelbar aufgebracht werden.

Alternativ kann das Adapterelement 9 gemäß der Erfindung auch zum Nachrüsten von bestehenden Sensoren unterschiedlichen Typs, insbesondere für unterschiedliche Temperatursensoren (Thermoelemente) verwendet werden. Der RFID-Chip 7 kann in diesem Fall bereits für einen bestimmten Sensortyp programmiert sein oder nachträglich durch einen Benutzer mit entsprechenden Informationen über einen bestimmten Sensortyp gespeist werden.

Die Positionierung des RFID-Chips 7 im Bereich der Stirnseite 3 ist nicht auf die in der Figur gezeigte Positionierung zwischen den Steckkontakten 5, 5' beschränkt. Vielmehr ist auch eine seitliche, d.h. eine randseitige Positionierung des RFID-Chips 7 auf der Stirnseite 3 möglich. Weiterhin kann auch mehr als ein RFID-Chip im Bereich der Steckkontakte 5, 5' bzw. im Bereich der Stirnseite 3 des Sensors 1 angeordnet sein. Entscheidend ist, dass das Adapterelement 9 und der RFID-Chip 7 im Wesentlichen flach, in einer Einsteckrichtung E des Sensors 1 gesehen, ausgebildet sind, so dass der Platzbedarf durch die Erweiterung mittels des Adapterelements bzw. des RFID-Chips 7 minimal ist. Eine bauliche Modifizierung des Sensors und damit verbindbarer Teile ist nicht notwendig.

Der erfindungsgemäße Sensor 1 weist folglich insbesondere in einer Umfangsrichtung, die quer zur Einsteckrichtung E des Sensors 1 verläuft, die üblichen Dimensionen auf, so dass keinerlei Modifizierung erforderlich ist. Das Messgerät oder der Steckverbinder muss lediglich einen entsprechenden Empfänger für die auf dem RFID-Chip 7 gespeicherten Informationen aufweisen, um eine entsprechende Zuordnung vornehmen zu können.

Das Adapterelement kann aus unterschiedlichen geeigneten Materialien hergestellt sein. Entscheidend ist, dass es sich zur Befestigung an dem Sensor 1 und zur Aufnahme des RFID-Chips 7 eignet und durch ein festes oder flexibles Material, insbesondere auch folien- oder scheibenartig ausbildbar ist.

### Bezugszeichenliste

- 1: Sensor
- 3: Stirnseite
- 5, 5': Steckkontakt
- 7: RFID-Chip
- 9: Adapterelement
- 11, 11': Durchgangsloch
- E: Einsteckrichtung

## Patentansprüche

1. Sensorvorrichtung (1), aufweisend mindestens einen oder mehrere Steckkontakte (5, 5') zum Verbinden der Sensorvorrichtung (1) mit einer Buchse, insbesondere eines Steckverbinders oder eines Messgeräts, und einen RFID-Chip (7) zum Speichern von Informationen über die Sensorvorrichtung (1),
**dadurch gekennzeichnet, dass** der RFID-Chip (7) an der Außenseite der Sensorvorrichtung (1) an einer den Steckkontakt bzw. die Steckkontakte (5, 5') aufweisenden Stirnseite (3) angeordnet ist.

2. Sensorvorrichtung nach Anspruch 1,
**dadurch gekennzeichnet, dass**
der RFID-Chip (7) im Wesentlichen flach ausgebildet ist.

3. Sensorvorrichtung nach Anspruch 1 oder 2,
**dadurch gekennzeichnet, dass**
der RFID-Chip (7) auf der Sensorvorrichtung (1) aufgeklebt ist.

4. Sensorvorrichtung nach einem der vorhergehenden Ansprüche,
**dadurch gekennzeichnet, dass**
der RFID-Chip (7) im Benutzungszustand der Sensorvorrichtung zwischen der Sensorvorrichtung (1) und der Buchse angeordnet ist.

5. Sensorvorrichtung nach einem der Ansprüche 1, 2 oder 4,
**dadurch gekennzeichnet, dass**
der RFID-Chip (7) an einem Adapterelement (9) befestigt, insbesondere darauf aufgeklebt ist.

6. Sensorvorrichtung nach Anspruch 5,
**dadurch gekennzeichnet, dass**
das Adapterelement (9) auf die Steckkontakte (5, 5') der Sensorvorrichtung (1) aufsteckbar ist.

7. Sensorvorrichtung nach Anspruch 5 oder 6,
**dadurch gekennzeichnet, dass**
das Adapterelement (9) als Leiterplatte ausgebildet ist.

8. Sensorvorrichtung nach einem der Ansprüche 5 bis 7,
**dadurch gekennzeichnet, dass**
die Geometrie des Adapterelements (9) an die die Steckkontakte (5, 5') aufweisende Stirnseite (3) der Sensorvorrichtung (1) angepasst ist.

9. Sensorvorrichtung nach einem der Ansprüche 5 bis 8,
**dadurch gekennzeichnet, dass**
das Adapterelement (9) im Wesentlichen flach ausgebildet ist.

10. Sensorvorrichtung nach einem der vorhergehenden Ansprüche,
**dadurch gekennzeichnet, dass**
es sich um ein Thermoelement, insbesondere des Typs "Mini" handelt.

11. Sensorvorrichtung nach einem der vorhergehenden Ansprüche,
**dadurch gekennzeichnet, dass**
der RFID-Chip (7) zwischen zwei Steckkontakten (5, 5') der Sensorvorrichtung (1) angeordnet ist.

12. Adapterelement mit einer Sensorvorrichtung aufweisend einen oder mehrere Steckkontakte (5,5'), insbesondere mit einem Thermoelement, wobei das Adapterelement mit der Sensorvorrichtung verbunden ist und an der Außenseite der Sensorvorrichtung an einer den Steckkontakt bzw. die Steckkontakte (5, 5') aufweisenden Stirnseite (3) angeordnet ist, wobei das Adapterelement einen RFID-Chip (7) zum Speichern von Informationen über die Sensorvorrichtung (1) aufweist.

13. Adapterelement mit Sensorvorrichtung nach Anspruch 12,
**dadurch gekennzeichnet, dass**
das Adapterelement auf einen oder mehrere Steckkontakte (5, 5') der Sensorvorrichtung (1) aufsteckbar ausgebildet ist.

## Claims

1. A sensor apparatus (1), comprising at least one or more plug contacts (5, 5') for connecting the sensor apparatus (1) to a socket, e.g. of a plug connector or a measuring device, and an RFID chip (7) for storing information about the sensor apparatus (1),
**characterized in that**
the RFID chip (7) is disposed at the outside of the sensor apparatus (1) on a front side (3) comprising the plug contact or plug contacts (5, 5').

2. The sensor apparatus according to claim 1,
**characterized in that**
the RFID chip (7) is configured to be substantially flat.

3. The sensor apparatus according to claim 1 or 2,
**characterized in that**
the RFID chip (7) is adhered to the sensor apparatus (1).

4. The sensor apparatus according to any one of the preceding claims,
**characterized in that**
the RFID chip (7) is disposed between the sensor apparatus (1) and the socket in the state of use of the sensor apparatus.

5. The sensor apparatus according to claim 1, 2 or 4,
**characterized in that**
the RFID chip (7) is attached such as adhered to an adapter element (9).

6. The sensor apparatus according to claim 5,
**characterized in that**
the adapter element (9) is mountable on the plug contacts (5, 5') of the sensor apparatus (1).

7. The sensor apparatus according to claim 5 or 6,
**characterized in that**
the adapter element (9) is configured as a circuit board.

8. The sensor apparatus according to any one of claims 5 to 7,
**characterized in that**
the adapter element's (9) geometry is adapted to the front side (3) of the sensor apparatus (1) comprising the plug contacts (5, 5').

9. The sensor apparatus according to any one of claims 5 to 8,
**characterized in that**
the adapter element (9) is configured to be substantially flat.

10. The sensor apparatus according to any one of the preceding claims,
**characterized in that**
it is a thermocouple, e.g. of the type "mini".

11. The sensor apparatus according to any one of the preceding claims,
**characterized in that**
the RFID chip (7) is disposed between two plug contacts (5, 5') of the sensor apparatus (1).

12. An adapter element with a sensor apparatus, comprising one or more plug contacts (5, 5'), in particular with a thermocouple, wherein the adapter element is in connection with the sensor apparatus and disposed at the outside of the sensor apparatus on a front side (3) comprising the plug contact or plug contacts (5, 5'), wherein the adapter element comprises an RFID chip (7) for storing information about the sensor apparatus (1).

13. The adapter element with the sensor apparatus according to claim 12,
**characterized in that**
the adapter element is formed to be mountable on one or more plug contacts (5, 5') of the sensor apparatus (1).

## Revendications

1. Dispositif de capteur (1), présentant au moins un ou plusieurs contacts à enficher (5, 5') pour la connexion du dispositif de capteur (1) à une douille, en particulier d'un connecteur à enficher ou d'un appareil de mesure, et une puce RFID (7) pour l'enregistrement d'informations relatives au dispositif capteur (1),
**caractérisé en ce que**
la puce RFID (7) est disposée sur la face extérieure du dispositif de capteur (1) sur une face frontale (3) présentant le contact à enficher ou les contacts à enficher (5, 5').

2. Dispositif de capteur selon la revendication 1,
**caractérisé en ce que**
la puce RFID (7) est constituée de façon sensiblement plate.

3. Dispositif de capteur selon la revendication 1 ou 2,
**caractérisé en ce que**
la puce RFID (7) est collée sur le dispositif de capteur (1).

4. Dispositif de capteur selon l'une des revendications précédentes,
**caractérisé en ce que**
la puce RFID (7), à l'état d'utilisation du dispositif de capteur, est disposée entre le dispositif de capteur (1) et la douille.

5. Dispositif de capteur selon l'une des revendications 1, 2 ou 4,
**caractérisé en ce que**
la puce RFID (7) est fixée à un élément adaptateur (9), en particulier collée sur celui-ci.

6. Dispositif de capteur selon la revendication 5,
**caractérisé en ce que**
l'élément adaptateur (9) est enfichable sur les contacts à enficher (5, 5') du dispositif de capteur.

7. Dispositif de capteur selon la revendication 5 ou 6,
**caractérisé en ce que**
l'élément adaptateur (9) est constitué comme plaque à circuit imprimé.

8. Dispositif de capteur selon l'une des revendication 5 à 7,
**caractérisé en ce que**
la géométrie de l'élément adaptateur (9) est adaptée à la face frontale (3) du dispositif de capteur (1) qui présente les contacts à enficher (5, 5').

9. Dispositif de capteur selon l'une des revendications 5 à 8,
**caractérisé en ce que**
l'élément adaptateur (9) est constitué de façon sensiblement plate.

10. Dispositif de capteur selon l'une des revendications précédentes,
**caractérisé en ce que**
il s'agit d'un thermocouple, en particulier du type « Mini ».

11. Dispositif de capteur selon l'une des revendications précédentes,
**caractérisé en ce que**
la puce RFID (7) est disposée entre deux contacts à enficher (5, 5') du dispositif de capteur (1).

12. Élément adaptateur muni d'un dispositif de capteur présentant un ou plusieurs contacts à enficher (5, 5'), en particulier d'un thermocouple, sachant que l'élément adaptateur est connecté au dispositif de capteur et disposé sur la face extérieure du dispositif de capteur sur une face frontale (3) présentant le contact à enficher ou les contacts à enficher (5, 5'), sachant que l'élément adaptateur présente une puce RFID (7) pour l'enregistrement d'informations relatives au dispositif de capteur (1).

13. Élément adaptateur avec dispositif de capteur selon la revendication 12,
**caractérisé en ce que**
l'élément adaptateur est constitué de façon enfichable sur un ou plusieurs contacts à enficher (5, 5') du dispositif de capteur (1).
